# FASCICULE DE BREVET EUROPEEN

(11) **EP 2 758 311 B1**
(45) Date de publication et mention de la délivrance du brevet: **15.02.2017**
(21) Numéro de dépôt: 12759743.3
(22) Date de dépôt: 19.09.2012
(51) Int. Cl.: B64G 1/24, B64G 1/28, B64G 1/40, B64G 1/44, B64G 1/26

(54) **PROCEDE DE CONTROLE D'ATTITUDE D'UN SATELLITE ET SATELLITE COMMANDE EN ATTITUDE**
VERFAHREN ZUR LAGEREGELUNG EINES SATELLITEN UND LAGEGEREGELTER SATELLIT
METHOD OF CONTROLLING THE ATTITUDE OF A SATELLITE AND ATTITUDE CONTROLLED SATELLITE

(30) Priorité: 19.09.2011 FR 1102835
(43) Date de publication de la demande: 30.07.2014
(73) Titulaire: Airbus Defence and Space SAS, 78130 Les Mureaux (FR)
(72) Inventeur: POLLE, Bernard, F-31650 Saint-Orens (FR)
(74) Mandataire: Ipside
(86) Numéro de dépôt international: PCT/EP2012/068454
(87) Numéro de publication internationale: WO 2013/041575

(56) Documents cités:
- EP-A1- 0 794 120
- EP-A2- 0 937 644
- WO-A2-92/09479
- FR-A1- 2 530 046
- US-A- 5 305 971
- US-A- 5 984 236

## Description

La présente invention appartient au domaine du contrôle d'attitude et d'orbite de satellites. Plus particulièrement, la présente invention concerne un procédé de contrôle d'attitude d'un satellite comportant un dispositif de stockage de moment cinétique dont le moment cinétique stocké doit être contrôlé, ainsi qu'un satellite comportant des moyens adaptés pour la mise en oeuvre de ce procédé de contrôle d'attitude.

Pour les satellites placés à haute altitude par rapport à la Terre (typiquement au-dessus de 1000 km), l'une des sources principales de couples perturbateurs susceptibles d'entraîner une modification indésirable de l'attitude du satellite est la pression solaire. C'est le cas par exemple pour les satellites placés en orbite géostationnaire (GEO, altitude d'environ 36000 km).

Pour contrôler l'attitude d'un tel satellite, il est connu d'utiliser des organes de contrôle permettant de créer des couples de réaction suivant trois axes indépendants, comme par exemple des roues, telles que des roues de réaction ou des volants d'inertie. De telles roues ont l'avantage de pouvoir fonctionner en utilisant l'énergie électrique renouvelable créée par des panneaux solaires.

Cependant, elles doivent stocker le moment cinétique créé par la compensation de certains couples perturbateurs externes dont la moyenne n'est pas nulle sur une longue période de temps, ce qui ne peut être fait qu'en augmentant progressivement la vitesse de rotation desdites roues. Ces roues forment un dispositif de stockage de moment cinétique, et doivent donc être dé-saturées régulièrement pour réduire leurs vitesses de rotation. Sans ces opérations de dé-saturation, les vitesses maximales de rotations des roues finiraient par être atteintes.

Ces opérations de dé-saturation sont généralement effectuées au moyen de propulseurs à ergols chimiques, et entraînent par conséquent un surplus de consommation d'ergols chimiques, ce qui est préjudiciable dans la mesure où lesdits ergols chimiques sont embarqués en quantité nécessairement limitée dans le satellite.

Pour les satellites comprenant des panneaux solaires munis de cellules photovoltaïques, destinés à fournir l'énergie électrique nécessaire au fonctionnement de la charge utile du satellite, il est connu d'exploiter la pression solaire en utilisant lesdits panneaux solaires comme voile solaire pour dé-saturer les roues. En effet, il est possible de créer des couples en dépointant les panneaux solaires par rapport au Soleil, couples qui peuvent être créés pour modifier l'attitude du satellite et/ou pour dé-saturer les roues.

Toutefois, le dépointage des panneaux solaires ne permet pas de créer des couples significatifs autour de l'axe de rotation desdits panneaux solaires, de sorte qu'il n'est pas possible de dé-saturer la composante du moment cinétique des roues suivant cet axe de rotation. D'autre part, un tel dépointage des panneaux solaires entraîne une baisse sensible de la quantité d'énergie électrique générée par ces panneaux solaires.

On connaît du brevet Français N° 2 530 046 un exemple de dispositif permettant de contrôler l'attitude d'un satellite en utilisant les panneaux solaires tout en limitant le besoin de dépointage desdits panneaux solaires. Dans cet exemple, les panneaux solaires sont munis d'ailettes latérales, lesdites ailettes présentant une inclinaison légèrement inférieure à 90° par rapport aux panneaux solaires. Tel qu'indiqué dans ledit brevet, un tel dispositif permet de limiter le besoin de dépointage des panneaux solaires dans la mesure où un dépointage de quelques degrés est suffisant pour créer des couples adaptés. Cependant, ce dispositif ne permet pas non plus de créer des couples significatifs sur le satellite autour de l'axe de rotation des panneaux solaires, donc de dé-saturer les roues suivant cet axe.

On connaît du brevet US 5 984 236 un satellite comportant des propulseurs électriques mis en oeuvre pour contrôler l'orbite dudit satellite, qui sont également mis en oeuvre pour dé-saturer un dispositif de stockage de moment cinétique dudit satellite. Lorsque le moment cinétique stocké dans le dispositif de stockage dépasse la capacité de dé-saturation des propulseurs électriques, le brevet US 5 984 236 décrit d'utiliser des moyens additionnels pour la dé-saturation, comme par exemple des propulseurs chimiques, des magnéto-coupleurs, des panneaux solaires, ou des roues de réaction,

La présente invention vise notamment à proposer un procédé de contrôle de l'attitude d'un satellite qui permette de dé-saturer le moment cinétique cumulé par un dispositif de stockage de moment cinétique suivant trois axes sans nécessiter de propulseur à ergol chimique, et qui permette de limiter les équipements nécessaires pour à la fois contrôler l'attitude du satellite et contrôler l'orbite dudit satellite.

Selon un premier aspect, l'invention concerne un procédé de contrôle d'attitude d'un satellite en orbite autour d'un corps céleste, l'attitude du satellite étant contrôlée au moyen d'un dispositif de stockage de moment cinétique et au moyen de surfaces commandables du satellite adaptées à créer des couples de dé-saturation du dispositif de stockage en exploitant la pression solaire, lesdites surfaces commandables étant agencées sur des panneaux solaires mobiles en rotation autour d'un axe Y. L'attitude du satellite est également contrôlée au moyen d'au moins un propulseur électrique également mis en oeuvre pour contrôler l'orbite du satellite, l'orientation de l'au moins un propulseur électrique étant commandée de sorte à activer ledit au moins un propulseur électrique avec une direction de poussée délibérément non alignée avec un centre de masse du satellite pour créer des couples de dé-saturation du dispositif de stockage exclusivement suivant l'axe Y, les surfaces commandables étant commandées pour créer des couples de dé-saturation dudit dispositif de stockage dans un plan orthogonal à l'axe Y.

Ainsi, le procédé de contrôle d'attitude repose sur l'utilisation d'au moins un propulseur électrique, par ailleurs utilisé pour contrôler l'orbite du satellite, pour dé-saturer le dispositif de stockage suivant l'axe Y. Les surfaces commandables sont utilisées pour dé-saturer le dispositif de stockage dans le plan orthogonal à l'axe Y, c'est-à-dire pour compenser notamment tout ou partie du moment cinétique éventuellement stocké dans ledit plan orthogonal à l'axe Y sous l'effet des couples créés par l'au moins un propulseur électrique.

Suivant des modes particuliers de mise en oeuvre, le procédé de contrôle d'attitude peut comporter l'une ou plusieurs des caractéristiques suivantes, prises isolément ou suivant toutes les combinaisons techniquement possibles.

Dans un mode particulier de mise en oeuvre, le procédé comporte :
- une étape de commande de l'au moins un propulseur électrique pour créer un couple ayant une composante de dé-saturation du dispositif de stockage adaptée à compenser tout ou partie du moment cinétique stocké suivant l'axe Y sous l'effet de couples perturbateurs,
- une étape de commande du dispositif de stockage pour compenser le couple créé par l'au moins un propulseur électrique,
- une étape de commande des surfaces commandables pour créer un couple de dé-saturation du dispositif de stockage adapté à compenser tout ou partie du moment cinétique stocké dans le plan orthogonal à l'axe Y sous l'effet du couple créé par l'au moins un propulseur électrique,
- une étape de commande du dispositif de stockage pour compenser le couple de dé-saturation créé par les surfaces commandables.

Dans un mode particulier de mise en oeuvre, les couples de dé-saturation créés au cours de l'étape de commande de l'au moins un propulseur électrique et au cours de l'étape de commande des surfaces commandables sont adaptés à borner les excursions du moment cinétique stocké au cours du temps dans le dispositif de stockage entre des valeurs prédéfinies.

Dans un mode particulier de mise en oeuvre :
- l'étape de commande de l'au moins un propulseur électrique et l'étape de commande du dispositif de stockage pour compenser le couple créé par l'au moins un propulseur électrique sont exécutées simultanément, et/ou
- l'étape de commande des surfaces commandables et l'étape de commande du dispositif de stockage pour compenser le couple de dé-saturation créé par les surfaces commandables sont exécutées simultanément.

Dans un mode particulier de mise en oeuvre, les surfaces commandables comprennent des surfaces photosensibles des panneaux solaires, et les couples de dé-saturation créés par les surfaces commandables sont créés par rotation des panneaux solaires autour de l'axe Y.

Dans un mode particulier de mise en oeuvre, les surfaces commandables comprennent des surfaces d'ailettes latérales liées aux panneaux solaires et inclinées par rapport auxdits panneaux solaires, et les couples de dé-saturation créés par lesdites surfaces commandables sont créés par rotation des panneaux solaires autour de l'axe Y.

Dans un mode particulier de mise en oeuvre, les surfaces commandables comprennent des surfaces à propriétés optiques commandables, et les couples de dé-saturation créés par lesdites surfaces commandables sont créés par modification des propriétés optiques desdites surfaces commandables.

Dans un mode particulier de mise en oeuvre, chaque activation de l'au moins un propulseur électrique pour créer des couples de dé-saturation du dispositif de stockage suivant l'axe Y est simultanée à une activation de l'au moins un propulseur électrique pour effectuer un contrôle de l'orbite dudit satellite.

Dans un mode particulier de mise en oeuvre, les couples de dé-saturation, créés pour permettre une modification du moment cinétique stocké par le dispositif de stockage, sont créés exclusivement au moyen des surfaces commandables et au moyen de l'au moins un propulseur électrique.

Dans un mode particulier de mise en oeuvre, le satellite étant mis à poste en orbite géostationnaire, l'au moins un propulseur électrique est mis en oeuvre pour effectuer un contrôle Nord-Sud de l'orbite du satellite.

Selon un second aspect, l'invention concerne un satellite destiné à être mis à poste en orbite autour d'un corps céleste, comportant des moyens de contrôler l'attitude dudit satellite et des moyens de contrôler l'orbite dudit satellite, lesdits moyens de contrôler l'attitude comportant un dispositif de stockage de moment cinétique et des moyens de dé-saturer adaptés à créer des couples de dé-saturation dudit dispositif de stockage. Les moyens de dé-saturer le dispositif de stockage comportent :
- des surfaces commandables du satellite adaptées à créer des couples de dé-saturation du dispositif de stockage en exploitant la pression solaire, lesdites surfaces commandables étant agencées sur des panneaux solaires mobiles en rotation autour d'un axe Y,
- au moins un propulseur électrique des moyens de contrôler l'orbite du satellite,
- un module de commande configuré pour commander l'orientation de l'au moins un propulseur électrique de sorte à activer ledit au moins un propulseur électrique avec une direction de poussée délibérément non alignée avec un centre de masse du satellite pour créer des couples de dé-saturation du dispositif de stockage exclusivement suivant l'axe Y, et configuré pour commander lesdites surfaces commandables pour créer des couples de dé-saturation dudit dispositif de stockage dans un plan orthogonal à l'axe Y.

Dans un mode particulier de réalisation, les surfaces commandables comprennent des surfaces photosensibles des panneaux solaires du satellite.

Dans un mode particulier de réalisation, les surfaces commandables comprennent des surfaces d'ailettes latérales liées aux panneaux solaires du satellite et inclinées par rapport auxdits panneaux solaires.

Dans un mode particulier de réalisation, les surfaces commandables comprennent des surfaces dont les propriétés optiques sont commandables.

L'invention sera mieux comprise à la lecture de la description suivante, donnée à titre d'exemple nullement limitatif, et faite en se référant aux figures qui représentent :
- Figure 1 : une représentation schématique d'un satellite en orbite géostationnaire,
- Figure 2 : une représentation schématique partielle d'un mode préféré de réalisation d'un satellite selon l'invention,
- Figures 3a, 3b et 3c : des représentations schématiques d'un exemple de mise en oeuvre d'un propulseur électrique pour créer des couples sur le satellite,
- Figure 4 : un diagramme illustrant les principales étapes d'un procédé de contrôle d'attitude selon un mode préféré de mise en oeuvre de l'invention,
- Figure 5 : des courbes représentant schématiquement les effets produits par le procédé de contrôle d'attitude sur le moment cinétique stocké dans un dispositif de stockage,
- Figure 6a et 6b : des représentations schématiques de variantes de panneaux solaires adaptés pour la mise en oeuvre d'un procédé de contrôle selon l'invention.

La présente invention concerne un procédé 50 de contrôle de l'attitude d'un satellite 10 suivant trois axes.

Dans la suite de la description, on se place de manière non limitative dans le cas d'un contrôle d'attitude d'un satellite à poste en orbite géostationnaire (GEO).

On note toutefois que, de manière plus générale, l'invention est applicable à tout satellite en orbite sur laquelle des couples perturbateurs externes agissant sur un satellite sont principalement les couples créés par la pression de radiation solaire, et sur laquelle des contrôles d'orbite réguliers doivent être effectués pour maintenir ledit satellite à poste.

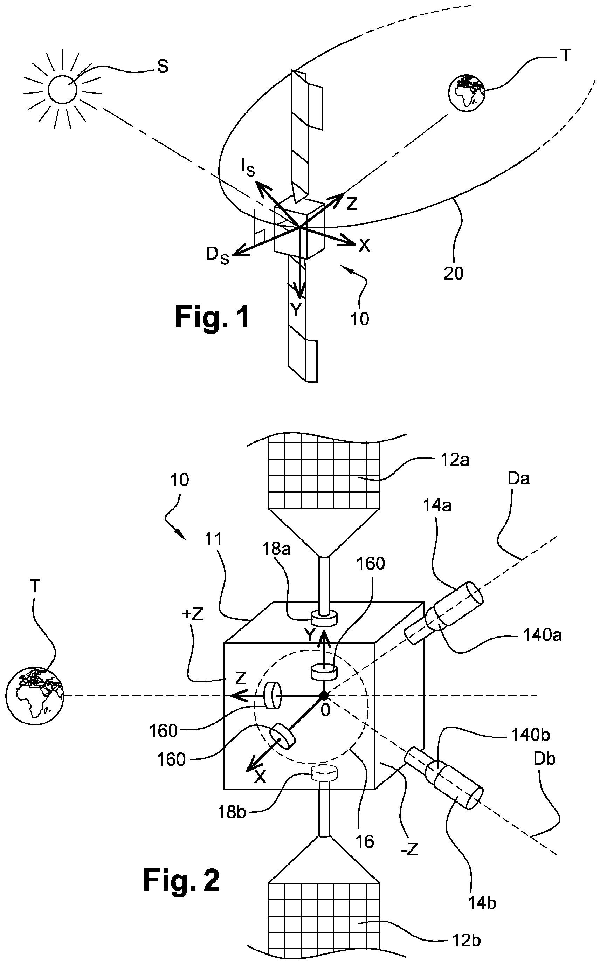

La figure 1 représente très schématiquement un satellite 10 mis à poste sur l'orbite GEO autour de la Terre T.

On définit un repère orbital local (X, Y, Z). Le centre O de ce repère est la position du centre O de masse du satellite 10. L'axe X est tangent au centre O à l'orbite géostationnaire 20 du satellite 10, et orienté suivant le vecteur vitesse du satellite 10. L'axe Z est dirigé vers la Terre T, et l'axe Y est orthogonal au plan XZ déterminé par les axes X et Z. L'orbite géostationnaire 20 étant sensiblement circulaire et centrée sur la Terre T, les axes X et Z sont orthogonaux entre eux.

Quand le satellite 10 est dans sa position et son attitude nominales une fois la mise à poste effectuée en orbite GEO, les axes X, Y, Z sont confondus avec des axes liés au satellite appelés axe de roulis pour l'axe X, axe de tangage pour l'axe Y et axe de lacet pour l'axe Z. Dans la suite, on ne considère plus que ces axes de roulis, tangage et lacet liés au satellite, que l'on continuera à nommer respectivement X, Y, Z.

On définit également un axe D_{S}, qui correspond à la projection de la direction satellite / Soleil S sur le plan XZ, et un axe I_{S}, dans le plan XZ et orthogonal à l'axe D_{S}.

La figure 2 représente schématiquement un mode préféré de réalisation d'un satellite 10 adapté à la mise en oeuvre de l'invention.

Dans l'exemple de la figure 2, le satellite 10 comporte un corps 11 principal, de forme sensiblement parallélépipédique, et deux panneaux solaires, respectivement 12a et 12b, agencés en position de service de part et d'autre dudit corps 11.

Par « en position de service », on entend la position que lesdits panneaux solaires 12a, 12b sont destinés à occuper dans le satellite lorsqu'il sera mis à poste en orbite GEO.

On comprend en effet que lesdits panneaux solaires peuvent occuper d'autres positions, afin notamment de réduire l'encombrement du satellite au lancement. En pratique, les panneaux solaires sont généralement constitués de plusieurs éléments de même forme rectangulaire repliés les uns sur les autres au lancement. Ils sont déployés une fois le satellite mis à poste sur l'orbite GEO ou sur une orbite de transfert. Dans ce cas, la position de service desdits panneaux solaires est la position qu'ils occupent après déploiement.

En position de service, les panneaux solaires 12a, 12b sont entraînés en rotation autour d'un axe sensiblement aligné avec l'axe de tangage Y par des moteurs électriques respectivement 18a et 18b situés à la base desdits panneaux solaires. L'axe de rotation des panneaux solaires est sensiblement dans le plan des panneaux, et correspond généralement à un axe de symétrie longitudinale des panneaux solaires. Lorsque le satellite est dans son attitude nominale une fois mis à poste sur l'orbite GEO, l'axe de rotation des panneaux est alors sensiblement perpendiculaire au plan de l'orbite GEO.

En position de service, les panneaux solaires 12a, 12b sont normalement orientés de sorte à maximiser le flux solaire qu'ils reçoivent, alors qu'une face du corps 11 du satellite, dite « face +Z », sur laquelle sont disposées par exemple des antennes de communication (non représentées sur les figures) reste dirigée vers la Terre. Dans ce cas, les panneaux solaires 12a, 12b tournent par rapport au corps 11 du satellite 10 d'environ un tour par jour.

Chaque panneau solaire 12a, 12b comporte une face sensiblement plane sur laquelle sont agencées des cellules photovoltaïques, dite « surface photosensible ». La surface photosensible de chaque panneau solaire 12a, 12b est orientée vers le Soleil pour générer l'électricité nécessaire au fonctionnement notamment de la charge utile du satellite 10. Dans le cas usuel où l'axe de rotation est maintenu sensiblement orthogonal au plan de l'orbite GEO, l'orientation optimale des faces avant des panneaux solaires est obtenue, par rotation des panneaux solaires autour de l'axe Y, lorsque l'axe D_{S} est sensiblement orthogonal auxdites surfaces photosensibles.

Le satellite 10 comporte également un système de contrôle d'attitude et d'orbite comportant :
- des moyens de contrôler l'orbite du satellite 10 (c'est-à-dire contrôler la position du satellite),
- des moyens de contrôler l'attitude du satellite 10 (c'est-à-dire contrôler l'orientation du satellite),
- un module de commande des moyens de contrôler l'attitude du satellite 10 et des moyens de contrôler l'orbite dudit satellite

### Moyens de contrôler l'orbite du satellite 10

Les moyens de contrôler l'orbite du satellite 10 sont mis en oeuvre pour effectuer principalement un contrôle Nord-Sud de l'orbite, ainsi qu'un contrôle Est-Ouest. Par « contrôle Nord-Sud », on entend un contrôle visant à maintenir le satellite 10 dans le plan prévu d'orbite. Par « contrôle Est-Ouest », on entend un contrôle de la position du satellite 10 dans le plan d'orbite. Il est en effet connu qu'un satellite dans l'espace doive être régulièrement ramené en position nominale sur son orbite de consigne. Par « position nominale », on entend la position qu'il devrait occuper sur son orbite de consigne à une date donnée. Dans le cas d'une orbite GEO, l'attraction de la Lune et du Soleil provoque une inclinaison indésirable de l'orbite (nécessitant un contrôle Nord-Sud de l'orbite), tandis que l'anisotropie de la sphère terrestre provoque une dérive vers l'Est ou l'Ouest de la position apparente vis-à-vis de la Terre (nécessitant un contrôle Est-Ouest de l'orbite).

Dans le cas d'une orbite GEO, les dérives liées à l'attraction de la Lune et du Soleil sont plus importantes que celles liées à l'anisotropie de la sphère terrestre, de sorte que le contrôle Nord-Sud est généralement effectué plus fréquemment que le contrôle Est-Ouest.

Les moyens de contrôler l'orbite du satellite 10 comportent, pour effectuer le contrôle Nord-Sud, au moins un propulseur électrique 14a, 14b.

De préférence, et tel qu'illustré par la figure 2, les moyens de contrôler l'orbite comportent deux propulseurs électriques 14a et 14b, pour créer des forces de poussée vers respectivement le Nord (et donner une impulsion au satellite 10 par réaction vers le Sud) et le Sud (et donner une impulsion au satellite 10 par réaction vers le Nord) pendant une durée suffisante pour ramener le satellite dans le plan prévu d'orbite GEO.

Rien n'exclut, suivant d'autres exemples non détaillés, d'avoir un propulseur électrique unique. En effet, les forces de poussée vers le Nord et vers le Sud sont généralement créées au voisinage d'instants différents correspondant à des positions prédéfinies du satellite 10 sur son orbite GEO. Ces positions prédéfinies sont sensiblement les noeuds de l'orbite du satellite (intersection de l'orbite avec le plan de l'équateur), et les forces de poussée sont créées continûment tout au long d'un segment d'orbite autour de ces noeuds. Il est possible en théorie d'effectuer le contrôle Nord-Sud avec un propulseur électrique unique en le montant sur un mécanisme adapté à orienter ledit propulseur électrique alternativement vers le Nord et vers le Sud. Toutefois, un tel mécanisme, adapté à effectuer un balayage Nord-Sud, serait complexe et augmenterait les risques de pannes. En outre, il n'y aurait aucune redondance en cas de panne du propulseur électrique.

Rien n'exclut non plus, suivant d'autres exemples non détaillés, d'avoir un nombre de propulseurs électriques 14a, 14b supérieur à deux, notamment à des fins de redondance et de robustesse du système de contrôle d'attitude et d'orbite en cas de panne d'un propulseur électrique.

Dans l'exemple représenté sur la figure 2, les propulseurs électriques 14a et 14b sont agencés du côté d'une face du satellite 10, désignée par « face -Z », opposée à la face +Z dirigée vers la Terre lorsque le satellite est dans sa position de service.

Sur la figure 2 sont représentées des directions nominales Da et Db des forces de poussée des propulseurs électriques 14a et 14b.

Par « directions nominales », on entend les directions des forces de poussée pour effectuer de façon efficace le contrôle Nord-Sud de l'orbite GEO sans créer de couple perturbateur susceptible de modifier l'attitude du satellite 10. Pour ne pas créer de couple perturbateur, les directions nominales Da et Db passent par le centre O de masse du satellite 10.

En outre, les directions nominales Da et Db, sont symétriques par rapport au plan XZ, et ne sont pas parallèles audit plan XZ car lesdits propulseurs électriques 14a, 14b doivent, pour effectuer le contrôle Nord-Sud de l'orbite, créer des forces qui ont une composante non nulle suivant l'axe de tangage Y. Du fait que les directions nominales Da et Db passent par le centre de masse du satellite 10 afin de ne pas créer de couples perturbateurs, l'angle de dépointage entre les directions nominales Da, Db et l'axe de tangage Y peut être important, afin de permettre d'avoir une composante importante suivant l'axe de tangage Y.

Par exemple sur la figure 2, les directions nominales Da et Db sont inclinées par rapport à l'axe Y d'angles respectivement approximativement 45° et approximativement -45°.

Les propulseurs électriques 14a et 14b sont mobiles en orientation. A cet effet, ils sont portés par des mécanismes 140a et 140b adaptés à modifier l'orientation des forces de poussée desdits propulseurs électriques. De tels mécanismes 140a et 140b sont nécessaires car la position du centre O de masse évolue avec le temps, par exemple du fait que la consommation d'ergols modifie la répartition des masses à bord du satellite 10. Les directions nominales Da et Db évoluent donc également avec le temps. Les mécanismes 140a et 140b sont mis en oeuvre dans les systèmes de contrôle d'attitude et d'orbite actuels pour assurer que les forces de poussée sont sensiblement alignées avec les directions nominales Da, Db lors des opérations de contrôle Nord-Sud de l'orbite, afin de limiter au maximum la création de couples par les propulseurs électriques.

Les moyens de contrôler l'orbite du satellite 10 peuvent également comporter des propulseurs de contrôle Est-Ouest, qui peuvent être électriques ou chimiques. La constitution des moyens de contrôle Est-Ouest de l'orbite du satellite 10 sort du cadre de l'invention.

### Moyens de contrôler l'attitude du satellite 10

Les moyens de contrôler l'attitude du système de contrôle d'attitude et d'orbite du satellite 10 comprennent :
- un dispositif 16 de stockage de moment cinétique,
- des moyens de dé-saturation du dispositif 16 de stockage.

Le dispositif 16 de stockage est de type connu de l'homme de l'art, et est par exemple constitué d'un ensemble de roues 160, telles que des roues de réaction et/ou des volants d'inertie. De telles roues 160 sont entraînées par des moteurs électriques qui permettent d'en modifier la vitesse de rotation. La modification de la vitesse de rotation d'une roue permet de modifier le moment cinétique de cette roue, et ainsi de créer un couple de réaction sur le satellite 10 autour de l'axe de rotation de ladite roue.

Les variations de moments cinétiques des roues sont commandées pour s'opposer aux couples perturbateurs externes et internes agissant sur le satellite 10, de sorte à maintenir l'attitude du satellite 10 au voisinage d'une attitude de consigne (avec une précision typique de 0.01° à 0.1°).

Dans l'exemple non limitatif illustré par la figure 2, le dispositif 16 de stockage comporte trois roues 160 agencées de sorte à permettre la variation de moments cinétiques suivant trois axes différents.

Le dispositif 16 de stockage est le dispositif principal dédié au contrôle d'attitude du satellite, dans la mesure où seul ce dispositif 16 de stockage est utilisé pour contrôler en permanence l'attitude du satellite 10 en boucle fermée et suivant trois axes.

Du fait du caractère cumulatif de certains couples perturbateurs au cours du temps, connu en soi (comme par exemple certains couples perturbateurs dus à la pression solaire agissant sur le satellite), la vitesse de rotation des roues 160 tend à augmenter jusqu'à une valeur limite supérieure.

Des moyens de dé-saturation doivent alors être mis en oeuvre pour dé-saturer lesdites roues, c'est-à-dire limiter l'excursion de leur vitesse en deçà d'une valeur limite donnée.

Plus précisément, les moyens de dé-saturation sont utilisés pour créer des couples, dits « couples de dé-saturation », dans la direction des moments cinétiques des roues 160 à dé-saturer.

Pour maintenir le satellite 10 dans son attitude de consigne malgré la création d'un couple de dé-saturation, le système de contrôle d'attitude et d'orbite du satellite 10 enverra des commandes aux roues 160 pour qu'elles créent un couple sensiblement opposé et égal en valeur absolue au couple de dé-saturation appliqué par les moyens de dé-saturation, ce qui aura pour effet de diminuer la vitesse de ces roues et par conséquent de déstocker le moment cinétique stocké dans ledit dispositif 16 de stockage.

Ce schéma de dé-saturation s'applique quels que soient les moyens de dé-saturation mis en oeuvre pour dé-saturer le dispositif 16 de stockage.

Dans un mode préféré de réalisation de l'invention, les moyens de dé-saturation du système de contrôle d'attitude et d'orbite du satellite 10 comprennent :
- les panneaux solaires 12a, 12b,
- au moins un des propulseurs électriques 14a, 14b également mis en oeuvre en tant que moyen de contrôler l'orbite du satellite10.

La mise en oeuvre des panneaux solaires 12a, 12b et d'au moins un propulseur électrique 14a, 14b pour créer des couples de dé-saturation du dispositif 16 de stockage sera décrite plus en détail ci-après.

### Module de commande

Le système de contrôle d'attitude et d'orbite du satellite 10 comporte en outre un module de commande, non représenté sur les figures, adapté à commander le dispositif 16 de stockage (par exemple la vitesse des roues dans l'exemple considéré), les moteurs d'entraînement 18a et 18b des panneaux solaires 12a et 12b, les mécanismes d'orientation 140a et 140b des propulseurs électriques 14a et 14b du système de contrôle d'orbite et les forces de poussée desdits propulseurs électriques.

De préférence, le module de commande est du type ordinateur programmé, comportant au moins un microprocesseur, et des moyens de mémorisation (disque dur magnétique, mémoire flash, disque optique, etc.) dans lesquels est mémorisé un produit programme d'ordinateur, sous la forme d'un ensemble d'instructions de code de programme à exécuter pour effectuer les tâches relatives au contrôle d'attitude et d'orbite du satellite 10. Suivant certains modes de réalisation, le module de commande comporte également un ou des circuits logiques programmables, de type FPGA, PLD, etc.

De manière connue en soi, le module de commande, pour contrôler l'attitude et l'orbite du satellite 10, traite un ensemble de données issues d'un ensemble de capteurs embarqués sur le satellite et collectées par des moyens connus, ainsi qu'un ensemble de consignes (c'est-à-dire des valeurs prédéfinies que doivent prendre certaines variables), ces consignes étant calculées par les opérateurs au sol, envoyées au satellite et stockées à bord par des moyens connus également.

Dans un mode particulier de mise en oeuvre, les mesures provenant de capteurs embarqués connus en soi et non détaillés ici sont par exemple les mesures des variables suivantes ou de leurs variations : attitude du corps du satellite 10 dans un repère inertiel, vitesse de rotation du corps du satellite dans un repère lié audit corps, vitesse de rotation des roues, angles d'orientation des panneaux solaires par rapport à une référence, angles d'orientation des mécanismes des propulseurs électriques par rapport à une référence, état des propulseurs électriques (en fonction ou à l'arrêt), etc. D'autres variables peuvent être calculées par le système de contrôle d'attitude et d'orbite à partir de ces mesures, et on parlera alors de variables estimées.

Les consignes peuvent être par exemple les valeurs de consigne au cours du temps de l'attitude et de la vitesse du corps du satellite 10 dans le repère (X, Y, Z), de l'orientation des mécanismes d'orientation des propulseurs électriques par rapport au corps du satellite 10, de l'orientation des panneaux solaires par rapport à ce corps, des intervalles de temps pendant lesquels les forces de poussée des propulseurs électriques doivent être créées, etc. Ces consignes sont envoyées par les opérateurs du satellite, ou calculées à bord en fonction de consignes de plus haut niveau envoyées par les opérateurs.

A partir des écarts constatés entre tout ou partie des valeurs de consigne et leurs valeurs mesurées ou estimées pour les variables correspondantes, le système de contrôle d'attitude et d'orbite du satellite 10 va calculer les forces de poussée et les couples à transmettre au satellite afin de diminuer ces écarts, puis il va calculer et transmettre des ordres de commande aux organes, connus en soi, en charge de modifier respectivement la vitesse des roues, l'orientation des panneaux solaires, l'orientation des mécanismes portant les propulseurs électriques, l'état de fonctionnement ou d'arrêt desdits propulseurs électriques, lesdits ordres de commande étant des ordres de modifications de ces variables tels que la réalisation de ces modifications par ces organes réaliseront les forces et les couples de contrôle désirés.

### Procédé de contrôle d'attitude du satellite

Dans son principe, le procédé 50 de contrôle d'attitude selon l'invention concerne plus particulièrement la création de couples de dé-saturation du dispositif 16 de stockage, et vise à utiliser principalement des actionneurs électriques pour créer lesdits couples de dé-saturation.

Pour dé-saturer le dispositif 16 de stockage du satellite 10 représenté sur la figure 2, les moyens de dé-saturation suivants sont préférentiellement mis en oeuvre :
- les panneaux solaires 12a, 12b,
- au moins un propulseur électrique 14a, 14b également mis en oeuvre en tant que moyen de contrôler l'attitude du satellite10.

Il est à noter que les panneaux solaires 12a, 12b représentés sur la figure 2 sont adaptés à créer des couples, par exploitation de la pression solaire, dans le plan XZ.

L'obtention de couples dans la plan XZ en utilisant les panneaux solaires 12a, 12b s'effectue suivant des méthodes connues et brièvement résumées ci-après. On se place de manière non limitative, à des fins de simplification de l'exposé, dans le cas où l'axe longitudinal des panneaux solaires 12a, 12b et l'axe de rotation desdits panneaux solaires sont confondus et alignés avec l'axe de tangage Y. Dans cette configuration, les panneaux solaires 12a, 12b sont orientés nominalement vers le soleil, c'est-à-dire que la normale des panneaux solaires est alignée avec l'axe D_{S}.

En dépointant, par rapport à l'axe D_{S}, les deux panneaux solaires 12a, 12b d'un même angle mais dans des directions opposées, on crée un couple suivant l'axe D_{S}, dit « couple de moulin à vent ».

En dépointant un seul des panneaux solaires d'un certain angle, la pression solaire sera légèrement plus faible sur ce panneau solaire, et un couple, dit « couple de déséquilibrage » (ou « unbalance » en anglais) suivant l'axe I_{S} sera ainsi créé, dans l'un ou l'autre sens autour de cet axe I_{S} suivant qu'on dépointe le panneau solaire 12a ou le panneau solaire 12b. Si on dépointe uniquement le panneau solaire 12a d'un angle α, on crée, simultanément au couple de déséquilibrage, un couple de moulin à vent suivant l'axe D_{S}. Si on veut créer un effet long terme équivalent uniquement à un couple de déséquilibrage suivant l'axe I_{S}, il faut dépointer le panneau solaire 12a alternativement et successivement d'un angle α puis d'un angle opposé -α durant la même durée, par exemple 5 minutes d'un côté et 5 minutes de l'autre. Ainsi, le couple de moulin à vent sera périodique à moyenne nulle, ce qui ne produira aucun effet long terme cumulatif sur l'augmentation du moment cinétique du dispositif 16 de stockage. L'effet court terme du couple de moulin à vent périodique sera compensé par le dispositif 16 de stockage, sans créer d'augmentation du moment cinétique à long terme dans cette direction.

En additionnant les deux commandes de dépointage des panneaux solaires 12a, 12b dont l'une crée une composante de couple moyen suivant l'axe D_{S} et l'autre une composante de couple moyen suivant l'axe I_{S}, il en résultera un couple moyen dans le plan XZ ayant lesdites composantes selon respectivement lesdits axes.

On constate que les panneaux solaires 12a, 12b de la figure 2 ne permettent pas de créer des couples de dé-saturation suivant l'axe Y.

Or il est connu que les couples perturbateurs ont, suivant l'axe Y, une moyenne non nulle sur de longues périodes (plusieurs périodes orbitales). On peut citer notamment les sources suivantes de couples perturbateurs :
- la pression solaire sur les différentes surfaces du satellite 10, y compris les panneaux solaires 12a, 12b,
- la pression radiofréquence créée par d'éventuelles antennes du satellite 10 en émission.

Le dispositif 16 de stockage va devoir compenser ces couples perturbateurs en augmentant continuellement la composante de son moment cinétique suivant l'axe Y, pouvant aller ainsi à saturation si rien n'est fait.

Par conséquent, l'au moins un propulseur électrique 14a, 14b est mis en oeuvre pour créer des couples de dé-saturation du dispositif 16 de stockage suivant l'axe de tangage Y.

Ainsi, le procédé 50 de contrôle d'attitude met en oeuvre les propulseurs électriques 14a, 14b pour modifier la composante du moment cinétique du dispositif 16 de stockage suivant l'axe de tangage Y, afin de compenser l'effet cumulatif des couples perturbateurs dans cette direction.

Préférentiellement, les propulseurs électriques 14a, 14b sont mis en oeuvre pour créer des couples de dé-saturation simultanément aux opérations de contrôle Nord-Sud de l'orbite.

Plus précisément, lorsqu'un des propulseurs électriques 14a, 14b est mis en fonctionnement pour réaliser le contrôle Nord-Sud de l'orbite, le module de commande va commander un biais de pointage de ce propulseur électrique par rapport à sa direction nominale (dans laquelle aucun couple n'est créé par ledit propulseur électrique), ce biais de pointage étant adapté pour que la force de poussée créée par ce propulseur électrique au cours de la manoeuvre Nord-Sud crée simultanément un couple C_{E} dont une composante C_{Y} de dé-saturation suivant l'axe de tangage Y est égale à une consigne prédéfinie non nulle.

Pendant ces opérations, le module de commande envoie simultanément des ordres au dispositif 16 de stockage pour compenser l'effet du couple C_{Y} de dé-saturation créé par les propulseurs électriques 14a, 14b afin de maintenir l'attitude du satellite 10 proche de l'attitude de consigne.

Pour ce faire, le dispositif 16 de stockage va créer un couple sensiblement opposé au couple C_{Y} de dé-saturation, ce qui aura pour effet final de retrancher à la composante de moment cinétique du dispositif 16 de stockage suivant l'axe de tangage Y une quantité égale à une valeur H_{Y}. Le couple C_{Y} de dé-saturation est donc choisi de sorte que sa compensation va retrancher une valeur H_{Y} qui permette effectivement de dé-saturer le dispositif 16 de stockage suivant l'axe Y.

Cependant, la création du couple C_{Y} de dé-saturation par les propulseurs électriques 14a, 14b s'accompagne de la création de couples C_{X}, C_{Z} résiduels dans les autres directions respectivement X et Z, du fait que la direction de poussée desdits propulseurs est nécessairement biaisée par rapport à l'axe Y (ce point sera détaillé plus loin). Ces couples C_{X}, C_{Z} résiduels vont être compensés par le dispositif 16 de stockage, ce qui aura généralement pour effet d'augmenter la composante du moment cinétique du dispositif 16 de stockage dans le plan XZ.

Le module de commande va alors effectuer une réduction de la composante du moment cinétique du dispositif 16 de stockage dans le plan XZ grâce aux panneaux solaires 12a, 12b, qui eux sont adaptés à créer des couples de contrôle d'attitude dans ce plan, cette réduction s'effectuant suivant le même principe que la dé-saturation du moment cinétique suivant l'axe Y.

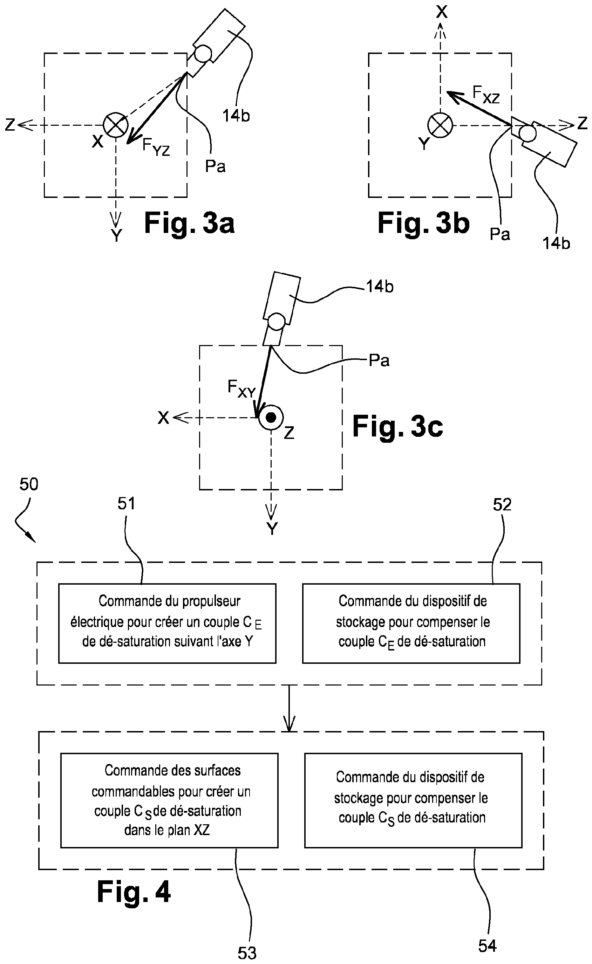

Les figures 3a, 3b et 3c illustrent les projections F_{YZ}, F_{XZ}, F_{XY} de la force F_{P} de poussée exercée par le propulseur électrique 14b suivant les plans respectivement YZ, XZ et XY.

Sur la figure 3a est représentée la projection F_{YZ} de la force de poussée du propulseur électrique 14b dans le plan YZ. L'orientation du propulseur électrique est telle que la composante F_{YZ} de la force F_{P} de poussée contient une composante suivant l'axe Y qui permet le contrôle Nord-Sud de l'orbite du satellite.

Idéalement, le dépointage du propulseur électrique servant à créer un couple de dé-saturation suivant l'axe Y est calculé de telle sorte que simultanément à cette création, aucun couple n'est créé suivant l'axe X. Ceci est possible en faisant en sorte que la droite passant par le point d'application Pa de la force F_{P} de poussée et dont la direction est celle de ladite force de poussée intersecte la droite de direction X en passant par le centre O de masse du satellite 10.

Cependant, dans l'exemple illustré par la figure 3a, la composante F_{YZ} n'est pas parfaitement dirigée vers le centre O de masse du satellite 10 comme elle devrait l'être idéalement. Cela est dû par exemple à une méconnaissance de la position exacte du centre O de masse et de la position exacte du point d'application Pa de la force F_{P} de poussée, et d'erreurs de pointage du propulseur électrique 14b induits par les défauts du mécanisme 140b de pointage. De ce fait, un couple C_{X} non nul est créé autour de l'axe X lors de cette manoeuvre Nord-Sud.

Sur la figure 3b, la composante F_{XZ} de la force F_{P} de poussée n'est pas nulle et que cette composante n'est pas dirigée vers le centre O de masse du satellite, entraînant la création d'un couple C_{Y} suivant l'axe Y.

Il est à noter que deux effets sont recherchés dans le contexte de l'invention : le premier pour le contrôle Nord-Sud de l'orbite du satellite 10, le second pour modifier la composante suivant l'axe Y du moment cinétique du dispositif 16 de stockage. Ces effets sont obtenus en désalignant la force F_{P} de poussée du propulseur électrique 14b par rapport à l'axe Y (figure 3a) et par rapport à l'axe Z (figure 3b) grâce au mécanisme 140b.

Tel qu'illustré par la figure 3c, le désalignement de la force F_{P} de poussée par rapport aux axes Y et Z crée nécessairement une composante F_{XY} dans le plan XY qui n'est pas dirigée vers le centre O de masse du satellite 10, ce qui crée un couple C_{Z} suivant l'axe Z.

On note au passage que le désalignement de la force F_{P} de poussée par rapport aux axes Y et Z pourrait être obtenu avec une composante F_{YZ} de la force F_{P} de poussée dirigée vers le centre O de masse du satellite 10. Le couple C_{X} n'est donc dû qu'à des erreurs de réalisation, alors que le couple C_{Z} résulte de la réalisation d'effets désirés.

L'homme de l'art comprend à partir de ces schémas que les composantes F_{YZ}, F_{XZ} et F_{XY} de la force F_{P} de poussée se déduisent géométriquement de façon simple à partir de la force F_{P} de poussée. Il comprend également que les composantes du couple C_{E} engendré par cette force F_{P} de poussée sur le satellite 10 suivant les axes X, Y, Z peuvent se calculer géométriquement de façon simple à partir des coordonnées de la position du point d'application Pa de la force F_{P} de poussée sur le satellite 10 et des composantes F_{YZ}, F_{XZ} et F_{XY} de la force de poussée.

L'homme de l'art comprend donc que plusieurs paramètres peuvent être ajustés pour créer un couple C_{E} comportant une composante C_{Y} adaptée à dé-saturer le dispositif 16 de stockage suivant l'axe Y, par exemple l'un ou plusieurs des paramètres suivants :
- la position du point d'application Pa de la force F_{P} de poussée par rapport au centre O de masse du satellite 10,
- la direction nominale de la force F_{P} de poussée,
- les angles de dépointage du propulseur électrique réalisés par le mécanisme de pointage dudit propulseur électrique,
- la poussée, c'est-à-dire la norme de la force F_{P} de poussée, si celle-ci est modulable en amplitude,
- la durée pendant laquelle le propulseur électrique est activé.

En outre, le propulseur électrique effectue de préférence simultanément les opérations de contrôle d'attitude et les opérations de contrôle d'orbite.

Dans ce cas, les paramètres précédents sont ajustés de sorte à assurer à la fois le contrôle Nord-Sud de l'orbite et la réalisation du couple C_{Y} de dé-saturation désiré suivant l'axe Y. L'ajustement de ces paramètres, une fois l'objectif fixé conformément à l'invention, est considéré comme étant à la portée de l'homme de l'art.

La figure 4 représente les principales étapes du procédé 50 de contrôle d'attitude selon un mode préféré de mise en oeuvre. Tel qu'illustré par la figure 4, le procédé 50 comporte les étapes récurrentes suivantes :
- une étape 51 de commande d'un propulseur électrique 14a, 14b pour créer un couple C_{E} ayant une composante C_{Y} de dé-saturation suivant l'axe Y adaptée à compenser tout ou partie de l'effet cumulatif de couples perturbateurs suivant cet axe,
- une étape 52 de commande du dispositif 16 de stockage de sorte à compenser le couple C_{E} créé par le propulseur électrique 14a, 14b,
- une étape 53, de commande des panneaux solaires 12a, 12b pour créer, par exploitation de la pression solaire, un couple Cs de dé-saturation adapté à compenser tout ou partie du couple (C_{E} - C_{Y}) créé dans le plan orthogonal à l'axe Y par le propulseur électrique 14a, 14b lors de l'étape 51 de commande,
- une étape 54 de commande du dispositif 16 de stockage de sorte à compenser le couple C_{S} de dé-saturation créé par les panneaux solaires 12a, 12b.

L'étape 51 de commande d'un propulseur électrique 14a, 14b vise à permettre la dé-saturation du moment cinétique cumulé par le dispositif 16 de stockage suivant l'axe Y sous l'effet cumulatif de couples perturbateurs externes suivant cet axe.

La consigne de couple C_{Y} est déterminée en fonction d'une stratégie de dé-saturation qui est par exemple pré-calculée et envoyée au module de commande. Cette consigne de couple C_{Y} est réalisée comme indiqué précédemment en calculant préalablement des angles de consigne de dépointage d'un propulseur électrique 14a, 14b puis en réalisant ces angles de consigne grâce aux mécanismes 140a, 140b de pointage.

L'étape 52 de commande du dispositif 16 de stockage est de préférence exécutée simultanément à l'étape 51 de commande du propulseur électrique, afin d'éviter un dépointage du satellite, et correspond à la réalisation de la dé-saturation dudit dispositif de stockage suivant l'axe Y.

Cette commande peut être réalisée par le contrôle fin de l'attitude du satellite réalisé par le dispositif 16 de stockage qui aura pour effet de compenser le couple C_{E} sans consignes particulières autres que stabiliser le satellite 10 autour de son attitude de consigne. En variante, une consigne de couple de valeur -C_{E} peut être envoyée au dispositif 16 de stockage, l'envoi de cette consigne étant synchronisé avec l'envoi de la consigne de couple C_{E} au propulseur électrique.

L'étape 53 de commande des panneaux solaires peut être effectuée en réalisant des biais de pointage desdits panneaux solaires comme expliqué précédemment. La consigne de couple C_{S} de dé-saturation dans le plan XZ est déterminée en fonction d'une stratégie de dé-saturation du moment cinétique du dispositif 16 de stockage dans le plan XZ. Cette étape 53 de commande peut être simultanée ou séquentielle par rapport à l'étape 51 de commande du propulseur électrique.

L'étape 54 de commande du dispositif 16 de stockage est de préférence exécutée simultanément à l'étape 53 de commande des panneaux solaires 12a, 12b, afin d'éviter un dépointage du satellite, et vise à compenser le couple C_{S} de dé-saturation créé par les panneaux solaires 12a, 12b.

Il est à noter que si les propulseurs électriques 14a, 14b et les panneaux solaires 12a, 12b sont commandés simultanément (étapes 51 et 53) et de sorte que la somme des couples de dé-saturation C_{E} et C_{S} est sensiblement égale au couple C_{Y} créé par les propulseurs électriques suivant l'axe Y, les étapes 52 et 54 de commande du dispositif 16 de stockage sont également simultanées et visent à compenser uniquement ledit couple C_{Y}.

Dans un mode particulier de mise en oeuvre, le procédé 50 de contrôle d'attitude comporte une étape de prédiction (non représentée sur les figures) des couples C_{X}, C_{Z} résiduels qui seront créés lors d'une prochaine exécution de l'étape 51 de commande de propulseur électrique. Dans ce cas, l'exécution de l'étape 53 de commande des surfaces commandables est démarrée avant l'exécution de la prochaine étape 51 de commande de propulseur électrique afin de dé-saturer le moment cinétique du dispositif 16 de stockage dans le plan XZ (étape 54 de commande) à un niveau tel qu'il ne puisse pas saturer lors de l'étape 52 de commande du dispositif 16 de stockage.

Tel qu'indiqué précédemment, chaque activation d'un propulseur électrique 14a, 14b pour créer un couple C_{Y} de dé-saturation sur le satellite 10 est de préférence simultanée à une activation de ce propulseur électrique 14a, 14b pour effectuer un contrôle Nord-Sud de l'orbite dudit satellite 10.

De la sorte, on évite d'avoir à augmenter la fréquence d'activation des propulseurs électriques 14a, 14b par rapport au cas où ils sont uniquement activés pour le contrôle d'orbite Nord-Sud. On contribue également à réduire le nombre d'opérations nécessaires pour effectuer le contrôle d'attitude et le contrôle d'orbite, dans la mesure où certaines opérations sont à présent des opérations à la fois de contrôle d'attitude et de contrôle d'orbite. On comprend que cet avantage est obtenu en introduisant un couplage entre le contrôle d'attitude et le contrôle d'orbite.

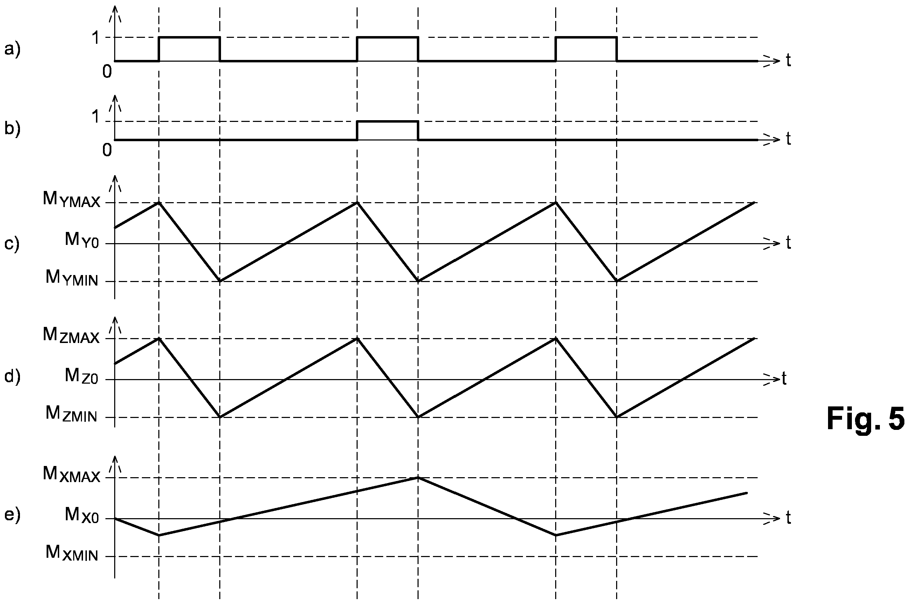

La figure 5 représente schématiquement les effets que peut produire le procédé 50 de contrôle d'attitude dans un exemple de mise en oeuvre. Plus particulièrement, la figure 5 représente l'évolution dans le temps de différents paramètres résultant des étapes 51, 52, 53 et 54 du procédé 50 de contrôle d'attitude.

Les parties a) et b) de la figure 5 représentent l'évolution temporelle de l'état des propulseurs électriques respectivement 14a et 14b au cours du temps, au moyen d'une variable qui prend la valeur 0 lorsque le propulseur électrique est à l'arrêt (force F_{P} de poussée non nulle), et la valeur 1 lorsque le propulseur électrique est activé (force F_{P} de poussée non nulle).

On note qu'au cours d'une période orbitale, les propulseurs électriques 14a et 14b vont fonctionner en alternance, le premier au voisinage d'un des noeuds de l'orbite GEO (points d'intersection de l'orbite GEO avec le plan de l'équateur), le second au voisinage de l'autre noeud.

Dans l'exemple considéré ici, on se place dans le cas où les étapes 51 de commande de propulseur électrique et 52 de commande du dispositif 16 de stockage sont exécutées simultanément à chaque fois qu'au moins un propulseur électrique 14a, 14b est utilisé pour le contrôle Nord-Sud de l'orbite.

La partie c) de la figure 5 représente la composante M_{Y} du moment cinétique du dispositif 16 de stockage suivant l'axe de tangage Y. Cette composante M_{Y} est centrée autour d'une valeur moyenne M_{Y0} non nulle (supposée de manière nullement limitative comme positive) car dans beaucoup d'applications, il n'est pas souhaitable que la vitesse des roues s'annule (en particulier à cause des perturbations dynamiques engendrées par les frottements secs dans les roulements).

On observe que cette composante M_{Y} a tendance à augmenter au cours du temps vers une valeur maximale M_{YMAX} à ne pas dépasser (zone de saturation). Cette augmentation est le résultat de l'effet cumulatif de couples perturbateurs externes agissant continuellement sur le satellite 10, cet effet étant continuellement compensé par le dispositif 16 de stockage pour éviter un dépointage du satellite 10. Il est à noter que le sens de variation du moment cinétique a été choisi arbitrairement à des fins d'illustration (on aurait pu montrer une diminution du moment cinétique jusqu'à une valeur minimale M_{YMIN} en deçà de laquelle une saturation se produit). Le sens de variation dépend du signe de la moyenne du couple perturbateur suivant l'axe Y.

On observe également que lorsqu'un propulseur électrique est activé, quand les étapes 51 de commande de propulseur électrique et 52 de commande du dispositif 16 de stockage sont exécutées, la composante M_{Y} du moment cinétique du dispositif 16 de stockage suivant l'axe Y varie assez rapidement jusqu'à une valeur de préférence sensiblement égale à la valeur minimale M_{YMIN} prédéfinie. Tel qu'indiqué précédemment, ceci est réalisé en commandant un dépointage approprié du propulseur électrique afin de créer un couple C_{Y} de dé-saturation dont l'effet cumulé correspond à une variation de moment cinétique d'excursion maximale (M_{YMAX}-M_{YMIN}). Les paramètres de dépointage du propulseur électrique mis en oeuvre sont ajustés par un calcul géométrique de sorte à permettre que la composante M_{Y} à la fin de l'activation du propulseur électrique soit sensiblement égale à la valeur minimale M_{YMIN}.

La partie d) de la figure 5 représente l'évolution au cours du temps de la composante M_{Z} du moment cinétique du dispositif 16 de stockage. Dans cet exemple, lors de l'exécution des étapes 51 de commande de propulseur électrique et 52 de commande dudit dispositif de stockage, la composante M_{Z} varie assez rapidement d'une valeur maximale M_{ZMAX} à une valeur minimale M_{ZMIN} (on se place de manière non limitative dans le cas d'un sens décroissant de variation de la composante M_{Z} lors de la dé-saturation du dispositif 16 de stockage suivant l'axe Y). Ceci est dû comme indiqué précédemment à la création inévitable par les propulseurs électriques 14a, 14b d'un couple C_{Z} résiduel à l'étape 51 de commande de propulseurs électriques, qui est compensé par le dispositif 16 de stockage.

Ensuite, la composante M_{Z} croît lentement jusqu'à une valeur voisine de M_{ZMAX}, du fait de l'exécution de l'étape 53 de commande des surfaces commandables, au cours de laquelle l'orientation des panneaux solaires 12a, 12b est commandée, et de l'exécution de l'étape 54 de commande du dispositif 16 de stockage. La valeur maximale M_{ZMAX} est donc une valeur de consigne prédéfinie. La prédiction du couple résiduel C_{Z} permet de définir cette valeur maximale M_{ZMAX} de sorte que la composante Mz varie autour d'une valeur moyenne M_{Z0} fixée à l'avance, entre les valeurs M_{ZMIN} et M_{ZMAX}.

Enfin, la partie e) de la figure 5 représente l'évolution de la composante M_{X} du moment cinétique du dispositif 16 de stockage suivant l'axe X pendant toutes ces opérations.

Sur la partie e), la vitesse de variation de la composante M_{X} est considérée de manière non limitative comme plus faible que pour les autres composantes M_{Y}, M_{Z} du moment cinétique, car le dépointage des propulseurs électriques 14a 14b peut être ajusté pour minimiser ladite composante M_{X}.

Dans l'exemple illustré par la partie e) de la figure 5, une erreur résiduelle systématique dans la connaissance de la position du centre O de masse du satellite 10 produit néanmoins un effet cumulatif, qu'on peut corriger lors de l'étape 53 de commande des surfaces commandables, au cours de laquelle l'orientation des panneaux solaires est commandée, et de l'étape 54 de commande du dispositif 16 de stockage.

Tel qu'illustré par la partie e) de la figure 5, la variation de la composante M_{X} autour d'une valeur moyenne M_{X0} entre une valeur minimale M_{XMIN} et une valeur maximale M_{XMAX} est plus lente que pour les composantes M_{Y} et M_{Z}. Par conséquent, il n'est pas nécessaire de dé-saturer la composante M_{X} à chaque activation d'un propulseur électrique 14a, 14b.

Il est à noter que le choix des valeurs moyennes M_{Y0}, M_{X0} et M_{Z0} des composantes M_{Y}, M_{X} et Mz sort du cadre de l'invention, et dépend de différentes contraintes d'opération des roues 160 du dispositif 16 de stockage.

De manière générale, tout type de panneaux solaires 12a, 12b adapté à la création de couples par voile solaire peut être mis en oeuvre dans le contexte de l'invention.

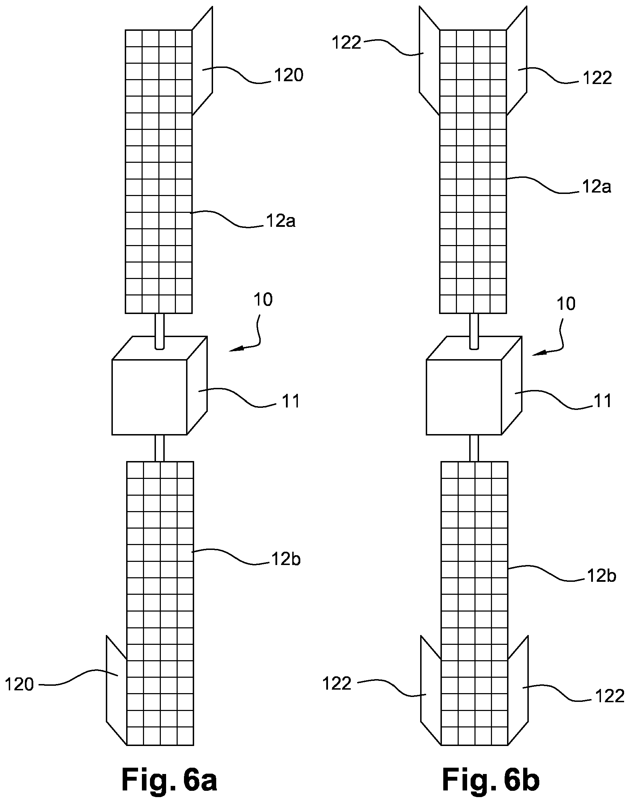

On a déjà cité par exemple les panneaux solaires décrits dans le brevet Français N° 2 530 046, dans lequel des couples peuvent être créés principalement dans le plan XZ en modifiant l'orientation relative des panneaux solaires, par rotation autour d'un axe de rotation parallèle à l'axe de tangage Y. De tels panneaux solaires sont illustrés par la figure 6a. De tels panneaux solaires sont munis de deux ailettes latérales 120, lesdites ailettes présentant une inclinaison légèrement inférieure à 90° par rapport aux panneaux solaires. Les surfaces commandables utilisées pour créer des couples de dé-saturation sont dans ce cas principalement les ailettes latérales 120.

Comme pour l'exemple décrit précédemment, les panneaux solaires décrits dans le brevet Français N° 2 530 046 sont adaptés à créer des couples dans un domaine d'action principalement plan (le plan XZ), de sorte que les propulseurs électriques 14a, 14b sont avantageusement mis en oeuvre pour créer des couples de dé-saturation en dehors du domaine d'action des panneaux solaires, c'est-à-dire suivant l'axe Y.

On peut citer également l'utilisation de panneaux solaires comportant des surfaces dont les propriétés optiques sont commandables sur les panneaux solaires 12a, 12b. Par « propriétés optiques », on entend plus particulièrement les propriétés de transmission, d'absorption et de réflexion de la lumière.

Par exemple, les surfaces à propriétés optiques commandables sont réalisées au moyen de matériaux électro-chromes, considérés comme connus de l'homme de l'art. De tels matériaux électro-chromes disposent d'au moins deux états optiques, et une transition d'un état optique à un autre s'effectue en leur appliquant une excitation électrique adaptée. Différents types de matériaux électro-chromes sont disponibles, permettant d'obtenir notamment les transitions suivantes :
- Type 1 : transition de transparent à opaque absorbant,
- Type 2 : transition de transparent à opaque réfléchissant,
- Type 3 : transition de opaque absorbant à opaque réfléchissant.

Un exemple approprié de panneaux solaires 12a, 12b comportant des surfaces à propriétés optiques commandables est décrit dans le brevet US N° 5 305 971. Dans cet exemple, des surfaces à propriétés optiques commandables sont agencées aux quatre coins des panneaux solaires les plus éloignés d'un corps du satellite. Par une commande adaptée des propriétés optiques de chacune des surfaces, des couples peuvent être crées, sous incidence normale des rayons solaires sur lesdits panneaux solaires, suivant l'axe Y et l'axe I_{S}. Des couples peuvent être créés suivant l'axe D_{S} par rotation opposée desdits panneaux solaires autour de leur axe de rotation.

On comprend donc que les panneaux solaires décrits dans le brevet US N° 5 305 971 peuvent être mis en oeuvre pour créer des couples suivant trois axes. L'utilisation des propulseurs électriques 14a, 14b pour le contrôle d'attitude peut dans ce cas permettre de réduire la capacité nécessaire pour une ou plusieurs roues 160 du dispositif 16 de stockage, réduction de capacité qui s'accompagnera d'une réduction de la masse du satellite 10.

Suivant un autre exemple, les panneaux solaires décrits dans le brevet US N° 5 305 971 ne sont avantageusement mis en oeuvre que pour créer des couples suivant les axes Y et I_{S} (sous hypothèse d'une incidence normale des rayons solaires sur les panneaux solaires), et les propulseurs électriques 14a, 14b sont mis en oeuvre pour transférer des couples perturbateurs suivant l'axe D_{S} dans le plan formé par les axes Y et I_{S}. De la sorte, les dépointages des panneaux solaires 12a, 12b par rapport au Soleil (pour créer des couples d'axe D_{S}) ne sont plus nécessaires, lesquels dépointages entraînent une baisse sensible de la quantité d'énergie électrique générée.

La figure 6b représente un autre exemple non limitatif de panneaux solaires 12a, 12b comportant des surfaces à propriétés optiques commandables. Dans ce cas les panneaux solaires 12a, 12b comportent chacun deux ailettes 122 latérales dont les propriétés optiques sont commandables. Lesdites ailettes 122 sont inclinées par rapport aux panneaux solaires 12a, 12b, par exemple vers l'arrière, d'un angle non nul de préférence inférieur à 45°, voire inférieur à 20°.

Du fait que les ailettes 122 sont inclinées par rapport aux panneaux solaires 12a, 12b, un couple d'axe D_{S} (sous hypothèse d'une incidence normale des rayons solaires sur les panneaux solaires) peut être créé en commandant séparément les propriétés optiques des ailettes 122, sans avoir à dépointer les panneaux solaires 12a, 12b par rapport au Soleil. On comprend donc que les panneaux solaires illustrés par la figure 6b peuvent être mis en oeuvre pour créer des couples suivant trois axes. L'utilisation des propulseurs électriques 14a, 14b pour le contrôle d'attitude peut dans ce cas permettre de réduire la capacité nécessaire pour une ou plusieurs roues 160 du dispositif 16 de stockage, réduction de capacité qui s'accompagnera d'une réduction de la masse du satellite 10.

On comprend donc que, au cours de l'étape 53 de commande des panneaux solaires 12a, 12b, on commande notamment l'orientation desdits panneaux solaires et/ou les propriétés optiques de surfaces à propriétés optiques commandables desdits panneaux solaires.

L'invention permet par conséquent d'avoir un satellite 10 comportant un système de contrôle d'attitude et d'orbite dans lequel les moyens de dé-saturation du dispositif 16 de stockage peuvent être constitués, en fonctionnement normal, exclusivement par des moyens électriques utilisés à bord du satellite pour réaliser d'autres fonctions :
- les panneaux solaires 12a, 12b (utilisés pour générer de l'énergie électrique),
- les propulseurs électriques 14a, 14b (utilisés pour le contrôle Nord-Sud et/ou le contrôle Est-Ouest de l'orbite) dont l'orientation peut être commandée grâce aux mécanismes 140a, 140b.

On entend, par « en fonctionnement normal », que rien n'exclut de prévoir d'autres moyens, y compris des propulseurs chimiques, pouvant être mis en oeuvre en cas de défaillance d'un ou de plusieurs moyens électriques mis en oeuvre par défaut pour dé-saturer le dispositif 16 de stockage.

Avantageusement, les propulseurs électriques 14a, 14b sont mis en oeuvre à la fois en tant que moyens de contrôler l'orbite du satellite 10 et en tant que moyens de contrôler l'attitude dudit satellite 10. Cette double utilisation des propulseurs électriques 14a, 14b introduit un couplage des opérations de contrôle d'attitude et de contrôle d'orbite qui va à l'encontre des préjugés de l'homme de l'art.

De manière plus générale, il est à noter que les modes de mise en oeuvre et de réalisation considérés ci-dessus ont été décrits à titre d'exemples non limitatifs, et que d'autres variantes sont par conséquent envisageables.

En particulier, on comprend que les panneaux solaires 12a, 12b peuvent être remplacés par d'autres surfaces du satellite 10 qui peuvent être mises en oeuvre pour créer des couples solaires par exploitation de la pression solaire. De telles surfaces sont des surfaces commandables, c'est-à-dire dont on peut commander notamment l'orientation et/ou les propriétés optiques.

En outre, l'homme de l'art comprend que le procédé selon l'invention se généralise facilement au cas où l'axe de symétrie longitudinale d'au moins un panneau solaire et l'axe de rotation du panneau solaire sont désalignés typiquement de quelques degrés à quelques dizaines de degré, et au cas où l'axe de rotation d'au moins un panneau solaire est désaligné par rapport à l'axe de tangage Y typiquement de quelques degrés à quelques dizaines de degré, et également lorsque les deux biais coexistent. Le procédé peut être mis en oeuvre selon le même principe que celui décrit ci-avant.

Une variante de réalisation consiste à utiliser un dispositif 16 de stockage de moment cinétique comportant des actionneurs gyroscopiques permettant à la fois de stocker un moment cinétique et de créer des couples suivant trois degrés de liberté.

## Revendications

1. - Procédé (50) de contrôle d'attitude d'un satellite (10) en orbite autour d'un corps céleste, l'attitude du satellite (10) étant contrôlée au moyen d'un dispositif (16) de stockage de moment cinétique et au moyen de surfaces commandables du satellite (10) adaptées à créer des couples (C_{S}) de dé-saturation du dispositif (16) de stockage en exploitant la pression solaire, lesdites surfaces commandables étant agencées sur des panneaux solaires (12a, 12b) mobiles en rotation autour d'un axe Y, ledit axe Y étant l'axe de tangage, dans lequel l'attitude du satellite (10) est également contrôlée au moyen d'au moins un propulseur électrique (14a, 14b) également mis en oeuvre pour contrôler l'orbite du satellite (10), l'orientation de l'au moins un propulseur électrique (14a, 14b) étant commandée de sorte à activer ledit au moins un propulseur électrique avec une direction de poussée délibérément non alignée avec un centre de masse du satellite (10) pour créer des couples (C_{Y}) de dé-saturation du dispositif (16) de stockage, l'au moins un propulseur électrique (14a, 14b) étant commandé pour créer des couples (C_{Y}) de dé-saturation du dispositif (16) de stockage exclusivement suivant l'axe Y, les surfaces commandables (12a, 12b) étant commandées pour créer des couples (C_{S}) de dé-saturation dudit dispositif de stockage dans un plan orthogonal à l'axe Y.

2. - Procédé (50) selon la revendication 1, **caractérisé en ce qu'**il comporte :
- une étape (51) de commande de l'au moins un propulseur électrique (14a, 14b) pour créer un couple (C_{E}) ayant une composante (C_{Y}) de dé-saturation du dispositif (16) de stockage adaptée à compenser tout ou partie du moment cinétique stocké suivant l'axe Y sous l'effet de couples perturbateurs,
- une étape (52) de commande du dispositif (16) de stockage pour compenser le couple (C_{E}) créé par l'au moins un propulseur électrique (14a, 14b),
- une étape (53) de commande des surfaces commandables (12a, 12b) pour créer un couple (C_{S}) de dé-saturation du dispositif (16) de stockage adapté à compenser tout ou partie du moment cinétique stocké dans le plan orthogonal à l'axe Y sous l'effet du couple (C_{E}) créé par l'au moins un propulseur électrique (14a, 14b),
- une étape (54) de commande du dispositif (16) de stockage pour compenser le couple (C_{S}) de dé-saturation créé par les surfaces commandables (12a, 12b).

3. - Procédé (50) selon la revendication 2, **caractérisé en ce que** les couples (C_{Y}, C_{S}) de dé-saturation créés au cours de l'étape (51) de commande de l'au moins un propulseur électrique et au cours de l'étape (53) de commande des surfaces commandables sont adaptés à borner les excursions du moment cinétique stocké au cours du temps dans le dispositif (16) de stockage entre des valeurs prédéfinies.

4. - Procédé (50) selon l'une des revendications 2 à 3, **caractérisé en ce que** :
- l'étape (51) de commande de l'au moins un propulseur électrique et l'étape (52) de commande du dispositif (16) de stockage pour compenser le couple (C_{E}) créé par l'au moins un propulseur électrique sont exécutées simultanément, et/ou
- l'étape (52) de commande des surfaces commandables (12a, 12b) et l'étape (54) de commande du dispositif (16) de stockage pour compenser le couple (C_{S}) de dé-saturation créé par les surfaces commandables sont exécutées simultanément.

5. - Procédé (50) selon l'une des revendications précédentes, **caractérisé en ce que** les surfaces commandables comprennent des surfaces photosensibles des panneaux solaires (12a, 12b), et **en ce que** les couples (C_{S}) de dé-saturation créés par lesdites surfaces commandables sont créés par rotation des panneaux solaires autour de l'axe Y.

6. - Procédé (50) selon l'une des revendications précédentes, **caractérisé en ce que** les surfaces commandables comprennent des surfaces d'ailettes latérales liées aux panneaux solaires (12a, 12b) et inclinées par rapport auxdits panneaux solaires, et **en ce que** les couples (C_{S}) de dé-saturation créés par lesdites surfaces commandables sont créés par rotation des panneaux solaires (12a, 12b) autour de l'axe Y.

7. - Procédé (50) selon l'une des revendications précédentes, **caractérisé en ce que** les surfaces commandables comprennent des surfaces à propriétés optiques commandables (122), et **en ce que** les couples (C_{S}) de dé-saturation créés par lesdites surfaces commandables sont créés par modification des propriétés optiques desdites surfaces commandables.

8. - Procédé (50) selon l'une des revendications précédentes, **caractérisé en ce que** chaque activation de l'au moins un propulseur électrique (14a, 14b) pour créer des couples (C_{Y}) de dé-saturation du dispositif (16) de stockage suivant l'axe Y est simultanée à une activation dudit au moins un propulseur électrique pour effectuer un contrôle de l'orbite dudit satellite.

9. - Procédé (50) selon l'une des revendications précédentes, **caractérisé en ce que** les couples (C_{Y}, C_{S}) de dé-saturation, créés pour permettre une modification du moment cinétique stocké par le dispositif (16) de stockage, sont créés exclusivement au moyen des surfaces commandables et au moyen de l'au moins un propulseur électrique (14a, 14b).

10. - Procédé (50) selon l'une des revendications précédentes, **caractérisé en ce que**, le satellite (10) étant mis à poste en orbite géostationnaire, l'au moins un propulseur électrique est mis en oeuvre pour effectuer un contrôle Nord-Sud de l'orbite du satellite (10).

11. - Satellite (10) destiné à être mis à poste en orbite autour d'un corps céleste, comportant des moyens de contrôler l'attitude dudit satellite et des moyens de contrôler l'orbite dudit satellite, lesdits moyens de contrôler l'attitude comportant un dispositif (16) de stockage de moment cinétique et des moyens de dé-saturer adaptés à créer des couples de dé-saturation dudit dispositif (16) de stockage, lesdits moyens de dé-saturer le dispositif (16) de stockage comportent :
- des surfaces commandables du satellite (10) adaptées à créer des couples (C_{S}) de dé-saturation du dispositif (16) de stockage en exploitant la pression solaire,
- au moins un propulseur électrique (14a, 14b) des moyens de contrôler l'orbite du satellite (10),
- un module de commande configuré pour commander l'orientation de l'au moins un propulseur électrique (14a, 14b) de sorte à activer ledit au moins un propulseur électrique avec une direction de poussée délibérément non alignée avec un centre de masse du satellite (10) pour créer des couples (C_{Y}) de dé-saturation du dispositif (16) de stockage, et configuré pour commander lesdites surfaces commandables pour créer des couples de dé-saturation dudit dispositif de stockage dans un plan orthogonal à un axe Y, ledit axe Y étant l'axe de tangage,
**caractérisé en ce que** ledit module de commande est configuré pour commander l'au moins un propulseur pour créer des couples (C_{Y}) de dé-saturation du dispositif (16) de stockage exclusivement suivant l'axe Y, lesdites surfaces commandables étant agencées sur des panneaux solaires mobiles en rotation autour de l'axe Y.

12. - Satellite (10) selon la revendication 11, **caractérisé en ce que** les surfaces commandables comprennent des surfaces photosensibles des panneaux solaires (12a, 12b) du satellite (10).

13. - Satellite (10) selon l'une des revendications 11 à 12, **caractérisé en ce que** les surfaces commandables comprennent des surfaces d'ailettes latérales liées aux panneaux solaires (12a, 12b) du satellite (10) et inclinées par rapport auxdits panneaux solaires.

14. - Satellite (10) l'une des revendications 11 à 13, **caractérisé en ce que** les surfaces commandables comprennent des surfaces dont les propriétés optiques sont commandables (122).

## Patentansprüche

1. Verfahren (50) zur Lageregelung eines Satelliten (10) in Umlaufbahn um einen Himmelskörper, wobei die Lage des Satelliten (10) mittels einer Drallspeichervorrichtung (16) und mittels steuerbarer Flächen des Satelliten (10), die geeignet sind, Drehmomente (C_{S}) zur Entsättigung der Speichervorrichtung (16) zu erzeugen, indem der Sonnendruck ausgenutzt wird, geregelt wird, wobei die steuerbaren Flächen auf Solarpaneelen (12a, 12b) drehbeweglich um eine Achse Y angeordnet sind, wobei die Achse Y die Nickachse ist, wobei die Lage des Satelliten (10) auch mittels mindestens eines elektrischen Triebwerks (14a, 14b) geregelt wird, das auch eingesetzt wird, um die Umlaufbahn des Satelliten (10) zu regeln, wobei die Ausrichtung des mindestens einen elektrischen Triebwerks (14a, 14b) derart gesteuert wird, um das mindestens eine elektrische Triebwerk mit einer Schubrichtung zu aktivieren, die absichtlich nicht mit einem Schwerpunkt des Satelliten (10) ausgerichtet wird, um Drehmomente (C_{Y}) zur Entsättigung der Speichervorrichtung (16) zu erzeugen, wobei das mindestens eine elektrische Triebwerk (14a, 14b) gesteuert wird, um Drehmomente (C_{Y}) zur Entsättigung der Speichervorrichtung (16) ausschließlich entlang der Achse Y zu erzeugen, wobei die steuerbaren Flächen (12a, 12b) gesteuert werden, um Drehmomente (C_{S}) zur Entsättigung der Speichervorrichtung in einer Ebene zu erzeugen, die orthogonal zur Achse Y ist.

2. Verfahren (50) nach Anspruch 1, **dadurch gekennzeichnet, dass** es Folgendes aufweist:
- einen Schritt (51) des Steuerns des mindestens einen elektrischen Triebwerks (14a, 14b), um ein Drehmoment (C_{E}) zu erzeugen, das eine Komponente (C_{Y}) der Entsättigung der Speichervorrichtung (16) aufweist, die geeignet ist, den gesamten oder einen Teil des gespeicherten Dralls entlang der Achse Y unter der Wirkung von Stördrehmomenten zu kompensieren,
- einen Schritt (52) des Steuerns der Speichervorrichtung (16), um das Drehmoment (C_{E}) zu kompensieren, das von dem mindestens einen elektrischen Triebwerk (14a, 14b) erzeugt wird,
- einen Schritt (53) des Steuerns der steuerbaren Flächen (12a, 12b), um ein Drehmoment (C_{S}) zur Entsättigung der Speichervorrichtung (16) zu erzeugen, das geeignet ist, den gesamten oder einen Teil des gespeicherten Dralls in der Ebene, die orthogonal zu der Achse Y ist, unter der Wirkung des Drehmoments (C_{E}), das von dem mindestens einen elektrischen Triebwerk (14a, 14b) erzeugt wird, zu kompensieren,
- einen Schritt (54) des Steuerns der Speichervorrichtung (16), um das Drehmoment (C_{S}) zur Entsättigung zu kompensieren, das durch die steuerbaren Flächen (12a, 12b) erzeugt wird.

3. Verfahren (50) nach Anspruch 2, **dadurch gekennzeichnet, dass** die Drehmomente (C_{Y}, C_{S}) zur Entsättigung, die während des Schrittes (51) des Steuerns des mindestens einen elektrischen Triebwerks und während des Schrittes (53) des Steuerns der steuerbaren Flächen erzeugt werden, geeignet sind, die Schwankungen des Dralls, der im Laufe der Zeit in der Speichervorrichtung (16) gespeichert wird, zwischen den vorgegebenen Werten zu begrenzen.

4. Verfahren (50) nach einem der Ansprüche 2 bis 3, **dadurch gekennzeichnet, dass**:
- der Schritt (51) des Steuerns des mindestens einen elektrischen Triebwerks und der Schritt (52) des Steuerns der Speichervorrichtung (16), um das Drehmoment (C_{E}) zu kompensieren, das von dem mindestens einen elektrischen Triebwerk erzeugt wird, gleichzeitig ausgeführt werden, und/oder
- der Schritt (52) des Steuerns der steuerbaren Flächen (12a, 12b) und der Schritt (54) des Steuerns der Speichervorrichtung (16), um das Drehmoment (C_{S}) zur Entsättigung, das durch die steuerbaren Flächen erzeugt wird, zu kompensieren, gleichzeitig ausgeführt werden.

5. Verfahren (50) nach einem der vorhergehenden Ansprüche, **dadurch gekennzeichnet, dass** die steuerbaren Flächen lichtempfindliche Flächen der Solarpaneele (12a, 12b) aufweisen, und dass die Drehmomente (C_{S}) zur Entsättigung, die durch die steuerbaren Flächen erzeugt werden, durch die Drehung der Solarpaneele um die Achse Y erzeugt werden.

6. Verfahren (50) nach einem der vorhergehenden Ansprüche, **dadurch gekennzeichnet, dass** die steuerbaren Flächen Flächen seitlicher Flügel aufweisen, die mit den Solarpaneelen (12a, 12b) verbunden sind und gegenüber den Solarpaneelen geneigt sind, und dass die Drehmomente (C_{S}) zur Entsättigung, die durch die steuerbaren Flächen erzeugt werden, durch Drehung der Solarpaneele (12a, 12b) um die Achse Y erzeugt werden.

7. Verfahren (50) nach einem der vorhergehenden Ansprüche, **dadurch gekennzeichnet, dass** die steuerbaren Flächen Flächen mit steuerbaren optischen Eigenschaften (122) aufweisen, und dass die Drehmomente (C_{S}) zur Entsättigung, die durch die steuerbaren Flächen erzeugt werden, durch das Modifizieren der optischen Eigenschaften der steuerbaren Flächen erzeugt werden.

8. Verfahren (50) nach einem der vorhergehenden Ansprüche, **dadurch gekennzeichnet, dass** jedes Aktivieren des mindestens einen elektrischen Triebwerks (14a, 14b), um Drehmomente (C_{Y}) zur Entsättigung der Speichervorrichtung (16) entlang der Achse Y zu erzeugen, gleichzeitig mit einem Aktivieren des mindestens einen elektrischen Triebwerks erfolgt, um eine Regelung der Umlaufbahn des Satelliten durchzuführen.

9. Verfahren (50) nach einem der vorhergehenden Ansprüche, **dadurch gekennzeichnet, dass** die Drehmomente (C_{Y}, C_{S}) zur Entsättigung, die erzeugt werden, um ein Modifizieren des Dralls, der in der Speichervorrichtung (16) gespeichert wird, zu ermöglichen, ausschließlich mittels der steuerbaren Flächen und mittels des mindestens einen elektrischen Triebwerks (14a, 14b) erzeugt werden.

10. Verfahren (50) nach einem der vorhergehenden Ansprüche, **dadurch gekennzeichnet, dass**, nachdem der Satellit (10) auf einer geostationären Umlaufbahn positioniert worden ist, das mindestens eine elektrische Triebwerk eingesetzt wird, um eine Nord-Süd-Regelung der Umlaufbahn des Satelliten (10) durchzuführen.

11. Satellit (10), der dazu bestimmt ist, auf einer Umlaufbahn um einen Himmelskörper positioniert zu werden, umfassend Mittel zur Lageregelung des Satelliten und Mittel zur Regelung der Umlaufbahn des Satelliten, wobei die Mittel zur Lageregelung eine Drallspeichervorrichtung (16) und Mittel zur Entsättigung aufweisen, die geeignet sind, Drehmomente zur Entsättigung der Speichervorrichtung (16) zu erzeugen, wobei die Mittel zur Entsättigung der Speichervorrichtung (16) Folgendes aufweisen:
- steuerbare Flächen des Satelliten (10), die geeignet sind, Drehmomente (C_{S}) zur Entsättigung der Speichervorrichtung (16) zu erzeugen, indem der Sonnendruck ausgenutzt wird,
- mindestens ein elektrisches Triebwerk (14a, 14b) der Mittel zur Regelung der Umlaufbahn des Satelliten (10),
- ein Steuermodul, das konfiguriert ist, um die Ausrichtung des mindestens einen elektrischen Triebwerks (14a, 14b) derart zu steuern, um das mindestens eine elektrische Triebwerk mit einer Schubrichtung zu aktivieren, die absichtlich nicht mit einem Schwerpunkt des Satelliten (10) ausgerichtet ist, um Drehmomente (C_{Y}) zur Entsättigung der Speichervorrichtung (16) zu erzeugen, und konfiguriert ist, um die steuerbaren Flächen zu steuern, um Drehmomente zur Entsättigung der Speichervorrichtung in einer Ebene zu erzeugen, die orthogonal zu einer Achse Y ist, wobei die Achse Y die Nickachse ist,
**dadurch gekennzeichnet, dass** das Steuermodul konfiguriert ist, um das mindestens eine Triebwerk zu steuern, um Drehmomente (C_{Y}) zur Entsättigung der Speichervorrichtung (16) ausschließlich entlang der Achse Y zu erzeugen, wobei die steuerbaren Flächen auf Solarpaneelen drehbeweglich um die Achse Y angeordnet sind.

12. Satellit (10) nach Anspruch 11, **dadurch gekennzeichnet, dass** die steuerbaren Flächen lichtempfindliche Flächen der Solarpaneele (12a, 12b) des Satelliten (10) aufweisen.

13. Satellit (10) nach einem der Ansprüche 11 bis 12, **dadurch gekennzeichnet, dass** die steuerbaren Flächen Flächen seitlicher Flügel aufweisen, die mit den Solarpaneelen (12a, 12b) des Satelliten (10) verbunden sind und gegenüber den Solarpaneelen geneigt sind.

14. Satellit (10) nach einem der Ansprüche 11 bis 13, **dadurch gekennzeichnet, dass** die steuerbaren Flächen Flächen aufweisen, deren optische Eigenschaften (122) steuerbar sind.

## Claims

1. - A method (50) of controlling the attitude of a satellite (10) in orbit around a celestial body, the attitude of the satellite (10) being controlled by means of an angular momentum storage device (16) and by means of controllable surfaces of the satellite (10) that are adapted to create torques (C_{S}) for de-saturating the storage device (16) by utilizing solar pressure, said controllable surfaces being arranged on mobile solar panels (12a, 12b) that can move in rotation around a Y axis, said axis being the pitch axis, in which the attitude of the satellite (10) is also controlled by means of at least one electric thruster (14a, 14b) also used to control the orbit of the satellite (10), the orientation of the at least one electric thruster (14a, 14b) being commanded so as to activate said at least one electric thruster with a direction of thrust deliberately not aligned with a center of mass of the satellite (10) so as to create torques (C_{Y}) for de-saturating the storage device (16), the at least one electric thruster (14a, 14b) being commanded so as to create de-saturation torques (C_{Y}) exclusively along the Y axis, the controllable surfaces (12a, 12b) being commanded so as to create torques (C_{S}) for de-saturating said storage device in a plane orthogonal to the Y axis.

2. - The method (50) as claimed in claim 1, **characterized in that** it comprises:
- a step (51) of commanding the at least one electric thruster (14a, 14b) to create a torque (C_{E}) having a component (C_{Y}) for de-saturating the storage device (16) adapted to compensate all or part of the angular momentum stored along the Y axis under the effect of disturbing torques,
- a step (52) of commanding the storage device (16) to compensate the torque (C_{E}) created by the at least one electric thruster (14a, 14b),
- a step (53) of commanding the controllable surfaces (12a, 12b) to create a torque (C_{S}) for de-saturating the storage device (16) adapted to compensate all or part of the angular momentum stored in the plane orthogonal to the Y axis under the effect of the torque (C_{E}) created by the at least one electric thruster (14a, 14b),
- a step (54) of commanding the storage device (16) to compensate the de-saturation torque (C_{S}) created by the controllable surfaces (12a, 12b).

3. - The method (50) as claimed in claim 2, **characterized in that** the de-saturation torques (C_{Y}, C_{S}) created in the course of the step (51) of commanding the at least one electric thruster and in the course of the step (53) of commanding the controllable surfaces are adapted to bound the excursions of the angular momentum stored over time in the storage device (16) between predefined values.

4. - The method (50) as claimed in one of claims 2 to 3, **characterized in that**:
- the step (51) of commanding the at least one electric thruster and the step (52) of commanding the storage device (16) to compensate the torque (C_{E}) created by the at least one electric thruster are executed simultaneously, and/or
- the step (52) of commanding the controllable surfaces (12a, 12b) and the step (54) of commanding the storage device (16) to compensate the de-saturation torque (C_{S}) created by the controllable surfaces are executed simultaneously.

5. - The method (50) as claimed in one of the preceding claims, **characterized in that** the controllable surfaces comprise photosensitive surfaces of the solar panels (12a, 12b), and **in that** the de-saturation torques (C_{S}) created by said controllable surfaces are created by rotation of the solar panels around the Y axis.

6. - The method (50) as claimed in one of the preceding claims, **characterized in that** the controllable surfaces comprise surfaces of lateral flaps tied to the solar panels (12a, 12b) and inclined with respect to said solar panels, and **in that** the de-saturation torques (C_{S}) created by said controllable surfaces are created by rotation of the solar panels (12a, 12b) around the Y axis.

7. - The method (50) as claimed in one of the preceding claims, **characterized in that** the controllable surfaces comprise surfaces with controllable optical properties (122), and **in that** the de-saturation torques (C_{S}) created by said controllable surfaces are created by modification of the optical properties of said controllable surfaces.

8. - The method (50) as claimed in one of the preceding claims, **characterized in that** each activation of the at least one electric thruster (14a, 14b) to create torques (C_{Y}) for de-saturating the storage device (16) along the Y axis is simultaneous with an activation of said at least one electric thruster to perform a control of the orbit of said satellite.

9. - The method (50) as claimed in one of the preceding claims, **characterized in that** the de-saturation torques (C_{Y}, C_{S}), created to allow a modification of the angular momentum stored by the storage device (16), are created exclusively by means of the controllable surfaces and by means of the at least one electric thruster (14a, 14b).

10. - The method (50) as claimed in one of the preceding claims, **characterized in that**, the satellite (10) being stationed in geostationary orbit, the at least one electric thruster is used to perform a North-South control of the orbit of the satellite (10).

11. - A satellite (10) intended to be stationed in orbit around a celestial body, comprising means for controlling the attitude of said satellite and means for controlling the orbit of said satellite, said means for controlling the attitude comprising an angular momentum storage device (16) and de-saturating means adapted to create torques for de-saturating said storage device (16), said means for de-saturating the storage device (16) comprise:
- controllable surfaces of the satellite (10) that are adapted to create torques (Cs) for de-saturating the storage device (16) by utilizing solar pressure,
- at least one electric thruster (14a, 14b) of the means for controlling the orbit of the satellite (10),
- a command module configured to command the orientation of the at least one electric thruster (14a, 14b) so as to activate said at least one electric thruster with a direction of thrust deliberately not aligned with a center of mass of the satellite (10) so as to create torques (C_{Y}) for de-saturating the storage device (16), and configured to control said controllable surfaces to create torques (C_{S}) for de-saturating said storage device in a plane orthogonal to a Y axis, said Y axis being the pitch axis,
**characterized in that** said command module is configured to command the at least one electric thruster (14a, 14b) so as to create de-saturation torques (C_{Y}) exclusively along the Y axis, said controllable surfaces being arranged on solar panels (12a, 12b) that can move in rotation around the Y axis.

12. - The satellite (10) as claimed in claim 11, **characterized in that** the controllable surfaces comprise photosensitive surfaces of the solar panels (12a, 12b) of the satellite (10).

13. - The satellite (10) as claimed in one of claims 11 to 12, **characterized in that** the controllable surfaces comprise surfaces of lateral flaps tied to the solar panels (12a, 12b) of the satellite (10) and inclined with respect to said solar panels.

14. - The satellite (10) as claimed in one of claims 11 to 13, **characterized in that** the controllable surfaces comprise surfaces with controllable optical properties (122).
